# EUROPÄISCHE PATENTSCHRIFT

(11) **EP 1 634 003 B1**
(45) Veröffentlichungstag und Bekanntmachung des Hinweises auf die Patenterteilung: **30.05.2007**
(21) Anmeldenummer: 04732588.1
(22) Anmeldetag: 13.05.2004
(51) Int. Cl.: F16K 15/02, F16K 15/06, F16L 29/02

(54) **SCHNELLKUPPLUNGSEINHEIT MIT INTEGRIERTEM RÜCKSCHLAGVENTIL**
FAST COUPLING UNIT WITH INTEGRATED CHECK VALVE
UNITE DE RACCORDEMENT RAPIDE POURVUE D'UNE SOUPAPE DE NON-RETOUR INTEGREE

(30) Priorität: 28.05.2003 DE 10324307
(43) Veröffentlichungstag der Anmeldung: 15.03.2006
(73) Patentinhaber: A. RAYMOND ET CIE, 38000 Grenoble (FR)
(72) Erfinder: MORETTI, Erminio, F-38000 Grenoble (FR); LALLEMENT, Franck, 73800 Les Marches (FR); RAYMOND, Albert, F-38640 Claix (FR)
(74) Vertreter: Rüttgers, Joachim
(86) Internationale Anmeldenummer: PCT/EP2004/005117
(87) Internationale Veröffentlichungsnummer: WO 2004/106786

(56) Entgegenhaltungen:
- EP-A- 1 223 392
- US-A- 2 177 278
- US-A- 2 327 611
- US-A- 2 960 998
- US-A- 5 711 508

## Beschreibung

Die Erfindung bezieht sich auf eine Schnellkupplungseinheit für fließ- oder strömungsfähige Medien führende Leitungen mit integriertem Rückschlagventil zur Steuerung des Mediendrucks oder zur Entlüftung in den das Medium führenden Leitungen, wobei das Rückschlagventil in einem von der Hauptleitung der Schnellkupplungseinheit abgehenden, nach außen offenen Nebenzweig angeordnet ist und sein Ventilkörper aus seiner den Durchlaß für das Medium sperrenden Stellung über einen von außen zugänglichen Ventilstößel gegen eine Rückstellkraft in seine den Durchtritt für das Medium freigebende Stellung bringbar ist.

Die europäische Patentanmeldung EP 1 223 392 A1 beschreibt ein Ventil, das dem Zweck dient, die Kühlmittelleitung einer Klimaanlage mit Kühlmittel zu befüllen. Das Ventilgehäuse weist ein Kupplungsteil auf, mit dem es an der Kühlmittelleitung im Bereich einer Befüllungsöffnung so abgebracht werden kann, dass sich die Befüllungsöffnung mit der Durchtrittsöffnung des Ventils deckt. Die Durchtrittsöffnung mündet hinter einer Abstufung in einen nach hinten offenen Hohlraum des Ventilgehäuses, in dem ein Ventilkörper verschiebbar ist, der zumindest in dem an die Durchtrittsöffnung unmittelbar anschließenden Abschnitt dichtend an der Wand dieses Hohlraums anliegt und einen kegelförmig auslaufenden Ventilkopf aufweist, der auf der Kante einer Abstufung zwischen der Durchtrittsöffnung und dem Hohlraum dichtend aufliegt bzw. zur Auflage gebracht werden kann. In dem Ventilkörper ist eine Verbindungsbohrung vorgesehen, die den Teil des Hohlraums, welche den Ventilkopf umgibt, mit dem nach hinten offenen Teil verbindet.

Für die Befüllung der Kühlmittelleitung mit Kühlmittel befindet sich das Ventil in einer geöffneten Stellung, d.h. der kegelförmige Ventilkopf ist von seinem Ventilsitz abgehoben oder muß mit einem Werkzeug in diese Stellung gebracht werden. Alternativ wird auch vorgeschlagen, den Ventilkörper für den Befüllungsvorgang vollkommen außerhalb des Ventilgehäuses bereit zu halten. Für die Befüllung wird ein Spezialwerkzeug auf das offene Ende des Ventilkörpers aufgesetzt, in dem sich ein Hohlraum befindet, der dabei unmittelbar mit dem oben erwähnten Hohlraum des Ventilgehäuses in Verbindung kommt und der über ein Absperrventil mit einer Kühlmittelquelle verbunden werden kann. Außerdem ist in dem Spezialwerkzeug ein Stößel verschiebbar, der betätigt wird, um nach vollzogener Befüllung den Ventilkörper zu verschieben und dichtend auf seinen Sitz zu pressen. Danach wird das Spezialwerkzeug wieder abgenommen. Um ein Lecken am Ventilsitz auszuschließen, wird eine metallische Dichtung zwischen Ventilsitz und Ventilkörper verlangt, d.h. beide Teile müssen aus einem geeigneten Metall sein, beispielsweise soll der Ventilkopf aus Messing und der Ventilsitz aus Stahl sein. Um den Ventilkopf auf seinem Sitz zu halten, muss der Ventilkörper mit seiner dazu gerippten Umfangsfläche in Pressverbindung mit der Innenwand des Ventilkörpers gebracht werden. Als zusätzliche Sicherheit wird vorgeschlagen, den Ventilkörper, sobald er sicher dichtend auf dem Ventilsitz aufsitzt, so zu verformen, dass er aus dieser Schließstellung nicht mehr bewegt werden kann.

Daraus ergibt sich schon, dass dieses Ventil nur für einen einmaligen Einsatz konzipiert ist. Die Möglichkeit, das Ventil wieder zu öffnen, um Kühlmittel abzulassen, eine Neubefüllung oder eine Entlüftung vorzunehmen, ist nicht vorgesehen. Außerdem ist das benötigte Spezialwerkzeug recht kompliziert und aufwendig. Das Erfordernis einer metallischen Dichtung zwischen Ventilkörper und Ventilsitz verteuert die Herstellung, was gerade wegen der nur einmaligen Verwendbarkeit besonders ins Gewicht fällt.

Die US-PS 5,711,508 offenbart eine Schnellkupplungseinheit, die T-Form hat. Durch den vom T-Stamm gebildeten Zweig tritt das fließfähige Medium ein und es verlässt die Einheit durch den einen im rechten Winkel abgehenden Zweig des T-Balkens. An der Stoßstelle von T-Stamm und T-Balken kann diese Verbindung durch einen Ventilkörper unterbrochen werden, der durch eine Feder in Richtung auf seinen Ventilsitz beaufschlagt ist und durch einen innerhalb des T-Stamms verschiebbaren Stößel mit Durchtrittsmöglichkeit für das Medium gegen die Kraft der Feder in Offenstellung gebracht und gehalten werden kann. Im anderen Zweig des T-Balkens befindet sich ein Rückschlag- oder Prüfventil, das es erlauben soll, mittels einer am Ende dieses Zweigs anschließbaren Messeinrichtung den Druck des Mediums innerhalb des Systems fortlaufend und während des Betriebs zu überwachen.

Dabei ist dieses Ventil vom offenen Ende her in diesen Zweig des T-Balkens eingeschraubt. Durch eine Teflon-Dichtung zwischen der Außenwand des Ventilgehäuses und der Innenwand des T-Balkens entstehen eine äußere und eine innere Kammer, wobei letztere direkte Verbindung zum das Medium führenden Zweig des T-Balkens hat, darin also der gleiche Druck wie im übrigen das Medium führenden System herrscht. Innerhalb des im wesentlichen hohlzylindrischen Ventilkörpers ist gegen die Kraft einer Rückstellfeder ein Ventilstößel verschiebbar, der an seinem Ende eine verformbare Dichtscheibe trägt, die bei entspannter Rückstellfeder auf der Ringfläche des Ventilgehäuses als Ventilsitz aufliegt und gegen die Kraft der Rückstellfeder von diesem Sitz abgehoben werden kann. Wird die Dichtscheibe von ihrem Sitz abgehoben, entsteht eine Verbindung zwischen der inneren und der äußeren Kammer, so dass mit Hilfe einer an der äußeren Kammer angeschlossenen Messvorrichtung der Druck im System während des Betriebs überwacht werden kann.

Das Ventil besteht, um es funktionsfähig zu machen, aus einer ganzen Anzahl von hier nicht sämtlich erwähnten Einzelteilen, die die Herstellung und den Einbau verteuern und verkomplizieren. Die erreichbare Dichtigkeit des Ventils mag für den beschriebenen Zweck ausreichend sein, eine wirklich zuverlässige, absolut leckfreie Absperrung lässt sich mit der auf einer Ringfläche des Ventilgehäuses aufliegenden verformbaren Dichtscheibe dauerhaft nicht erreichen.

Aufgabe der Erfindung ist es, eine Schnellkupplungseinheit der eingangs genannten Art mit einem darin integrierten Ventil zu versehen, mit dem der Druck innerhalb des Systems gesteuert, insbesondere bei Bedarf, z.B. bei notwendigen Wartungsarbeiten, herabgesetzt werden kann, das aber in geschlossenem Zustand eine höchstmögliche, praktisch absolut leckfreie Dichtigkeit gewährleistet. Dabei soll es einfach im Aufbau und in der Betätigung und kostengünstig in der Herstellung sein.

Erfindungsgemäß wird dies dadurch erreicht, dass der Nebenzweig der Schnellkupplungseinheit zugleich das Ventilgehäuse des Rückschlagventils ist und der in dem Ventilgehäuse axial bewegbare Ventilkörper einstückig ausgebildet ist und einen Ventilkegel aufweist, dessen Ventilsitz als korrespondierende Kegelfläche an einem in das offene Ende des Nebenzweigs bzw. Ventilgehäuses gegen dessen Innenwand abdichtend eingeschobenen, hohlen Gegenstück ausgebildet ist. Diese Anordnung besteht nur aus wenigen Teilen, die einfach und vorzugsweise aus Kunststoff herzustellen sind und einfach und schnell montiert werden können. Die Kegelflächen am Ventilkörper und Ventilsitz gewährleisten eine hohe Dichtigkeit des geschlossenen Ventils.

Nach einer bevorzugten Ausführungsform geht der Ventilkegel an seinem schmalen, nach außen gerichteten Ende direkt über in den Ventilstößel und dieser ragt in den Hohlraum eines nach außen offenen, becherförmigen Abschnitts des Gegenstücks. In diesem nach außen offenen Hohlraum ist der Ventilstößel leicht zugänglich und kann mit einem einfachen Werkzeug betätigt werden.

Der Ventilstößel ist vorzugsweise zylindrisch geformt und wird an der Innenfläche eines hohlzylindrischen Abschnitts des Gegenstücks, der sich zwischen dessen Kegelfläche und dessen becherförmigem Abschnitt befindet, geführt; in seiner Umfangsfläche kann der Ventilstößel mit Längsrillen versehen sein. Diese Längsrillen gewährleisten bzw. verbessern die Durchtrittsmöglichkeit für das Medium bei geöffnetem Ventil.

Am breiten, nach innen gerichteten Ende des Ventilkegels ist vorzugsweise ein zylindrischer Fortsatz angeformt, der der Führung und Zentrierung einer Rückstellfeder dient und durch den am Ventilkegel eine Stufe gebildet ist, so dass sich die Rückstellfeder mit ihrem einen Ende auf dieser Stufe und mit ihrem anderen Ende auf einer von der Wand des Nebenzweigs bzw. Ventilgehäuses nach innen ragenden Ringfläche abstützen kann. So vereinigt der Ventilkörper in einem einstückigen, in seiner Form unkomplizierten Bauteil den Schließkörper des Ventils, den Stößel zur Betätigung des Ventils und ein Teil zur Führung und Zentrierung der Rückstellfeder. Herstellung und Montage werden dadurch ebenfalls einfach und preisgünstig.

Die Innenwand des Nebenzweigs bzw. Ventilgehäuses kann mit Längsnuten versehen sein, die ebenfalls die Durchtrittsmöglichkeit für das Medium verbessern.

Der Ventilkegel weist in seinem Umfang eine Ringnut zur Aufnahme eines Dichtrings auf, der bei geschlossenem Ventil durch die Rückstellfeder und den Mediendruck im System fest in die Nut und gegen die Kegelfläche des Ventilsitzes gepresst wird, so dass eine hohe Dichtigkeit erreicht wird. Diese Dichtigkeit wird noch weiter erhöht, wenn das Ventilgehäuse und das Gegenstück an ihren Stoßstellen miteinander verschweißt bzw. verschmolzen sind. Der Nebenzweig der Schnellkupplungseinheit bzw. das durch ihn gebildete Ventilgehäuse, das Gegenstück und der Ventilkörper als Ganzes können vorteilhaft alle aus Kunststoff gespritzt oder gegossen sein.

Die Erfindung wird im folgenden anhand der anhängenden Zeichnung beispielhaft näher beschrieben; es zeigen:
- Fig. 1: die perspektivische Ansicht einer Schnellkupplungseinheit mit einer Explosionsdarstellung des darin integrierten erfindungsgemäßen Rückschlagventils zur Steuerung des Drucks im System,
- Fig. 2: einen Längsschnitt durch das Rückschlagventil und
- Fig. 3: einen Querschnitt durch das Rückschlagventil entlang der Linie A-A in Fig. 2.

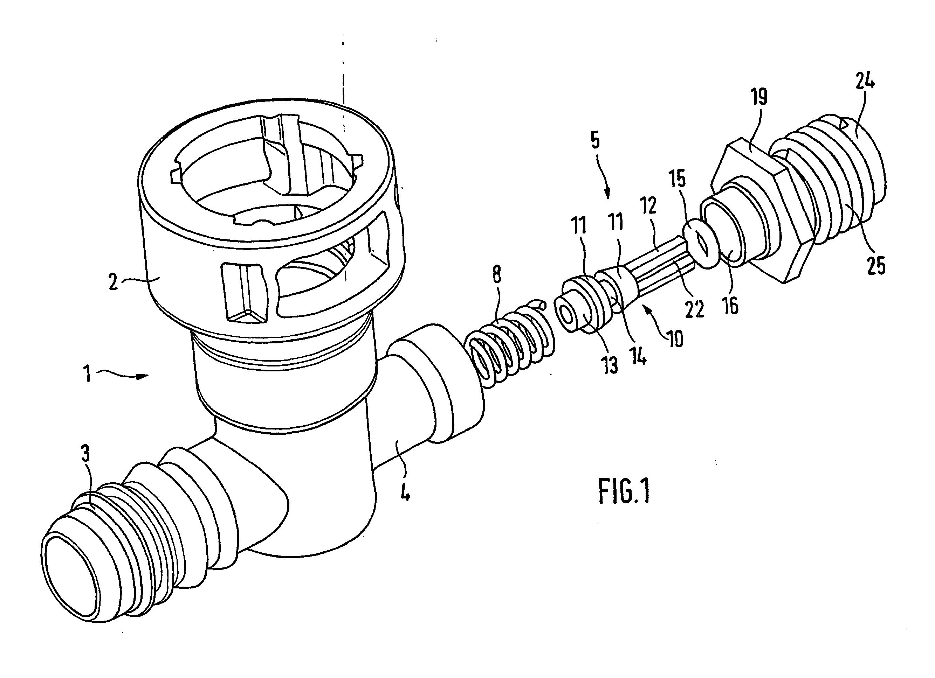

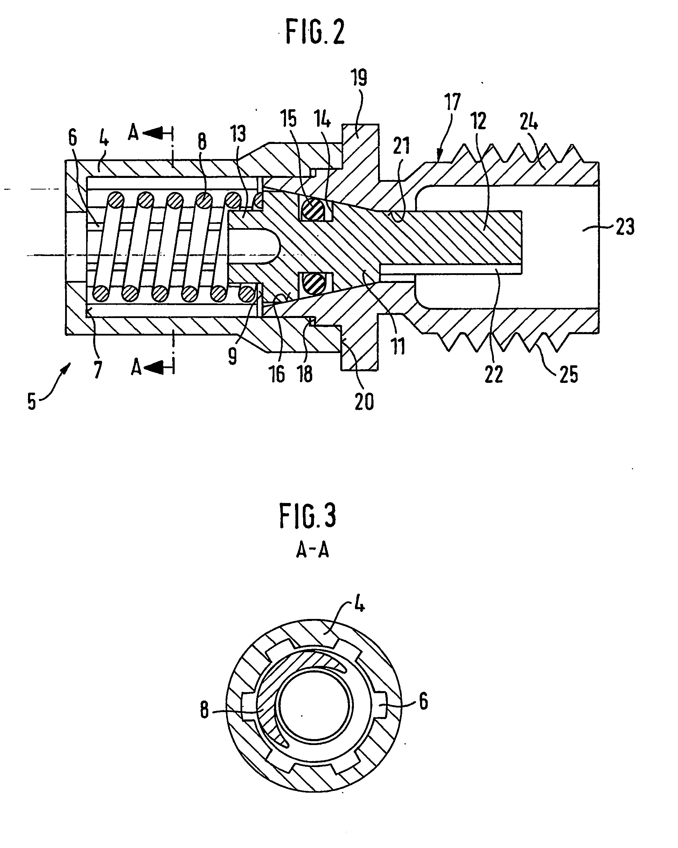

In Fig. 1 ist eine Schnellkupptungseinheit **1** dargestellt, die im wesentlichen T-Form hat. Die Hauptverbindung für das Medium besteht zwischen der Schnellkupplung **2** und dem dazu rechtwinklig stehenden Anschlusszweig **3**. Der den Anschlusszweig **3** verlängernde Nebenzweig **4** nimmt das Rückschlagventil **5** auf das in Fig. 1 in einer Explosionsdarstellung, sozusagen in seinen Einzelteilen vor dem Zusammenbau bzw. Einbau, wiedergegeben ist. Es wird unter gleichzeitiger Betrachtung des Längsschnitts in Fig. 2 beschrieben. Dabei zeigt die Fig. 2 von der Schnellkupplungseinheit **1** nur den Nebenzweig **4** mit dem darin eingebauten Rückschlagventil **5**. Der Nebenzweig **4** bildet ein hohlzylindrisches Gehäuse **4**, dessen Innenwand mit gleichmäßig beabstandeten Längsnuten **6** versehen ist (siehe dazu auch Fig. 3) und am Übergang zum in Fig. 2 nicht dargestellten Teil der Schnellkupplungseinheit eine nach innen gerichtete Ringfläche **7** aufweist.

Eine Rückstellfeder **8** stützt sich mit ihrem einen Ende auf dieser Ringfläche **7** und mit ihrem anderen Ende auf einer Stufe **9** ab, die an dem in das Gehäuse **4** eingeschobenen Ventilkörper **10** ausgebildet ist. Die Längsnuten **6** dienen der Zentrierung der Rückstellfeder **8** und bieten außerdem eine Durchtrittsmöglichkeit für das Medium (siehe unten). Der Ventilkörper **10** ist als Ventilkegel **11** ausgebildet, der an seinem schmaleren Ende in einen nach außen weisenden Ventilstößel **12** übergeht und an dessen breiterem Ende ein zylindrischer Fortsatz **13** angeformt ist, durch den die Stufe **9** entsteht und der gleichzeitig der Zentrierung und Führung der Rückstellfeder **8** dient. Der Ventilkegel **11** ist außerdem an seiner Umfangsfläche mit einer Ringnut **14** zur Aufnahme eines Dichtrings **15** versehen. Durch die Rückstellfeder **8** wird der Ventilkegel **11** in Anlage an einer korrespondierenden Kegelfläche **16** gehalten, die an einem Gegenstück **17** ausgebildet ist, das aus im wesentlichen drei Abschnitten besteht.

Der Abschnitt mit der Kegelfläche **16** ist in das offene Ende des Nebenzweigs **4** bzw. des durch den Nebenzweig gebildeten Ventilgehäuses **4** eingeschoben, um den Ventilsitz für den Ventilkegel **11** zu bilden. Er weist an seiner Außenfläche eine Abstufung **18** und einen radialen Ansatz **19** auf, mit denen er an einer im Ventilgehäuse **4** entsprechend vorgesehenen Stufe bzw. auf der Stirnfläche **20** des Ventilgehäuses **4** anliegt. Im Anschluss an die Kegelfläche **16** folgt ein Abschnitt mit zylindrischer Innenfläche **21**, an der der Ventilstößel **12** geführt wird, wenn zur Betätigung des Ventils der Ventilkörper **10** in axialer Richtung bewegt wird.

Damit bei von der Kegelfläche **16** abgehobenem Ventilkörper **10** eine Durchtrittsmöglichkeit für das Medium gegeben ist, ist die Umfangsfläche des Ventilstößels **12** mit Längsrillen **22** versehen. Durch den Abschnitt mit der zylindrischen Innenfläche **21** hindurch ragt der Ventilstößel **12** in den von außen zugänglichen Hohlraum **23** des dritten, becherförmigen Abschnitts **24** des Gegenstücks **17**. Die Außenwand des becherförmigen Abschnitts **22** ist mit einem Gewinde **25** versehen, so dass der Hohlraum **23** mit einer Schutzkappe (nicht dargestellt) nach außen verschlossen werden kann.

Um eine höchstmögliche Dichtigkeit der Anordnung zu gewährleisten, werden die gegeneinander nicht beweglichen Teile, nämlich der Nebenzweig **4** bzw. das durch ihn gebildete Ventilgehäuse **4** und das Gegenstück **17** nach dem Zusammenbau an ihren Stoßflächen vorzugsweise miteinander verschweißt oder verschmolzen, was dadurch erleichtert wird, dass die Teile bevorzugt aus einem geeigneten Kunststoff bestehen. Auch der Ventilkörper **10** ist vorteilhaft einstückig aus Kunststoff gegossen oder gespritzt.

In Ausgangsstellung ist das Ventil **5** geschlossen. Der Ventilkegel **11** wird sowohl durch die Rückstellfeder **8** als auch durch den im System herrschenden Druck fest und dichtend in Anlage an der Kegelfläche **16** gehalten und der Dichtring **15** wird dichtend in die Ringnut **14** und an die Kegelfläche **16** gepresst. Wenn z.B. für Wartungsarbeiten Druck im System abgebaut werden soll, so kann dies auf einfache Weise geschehen, indem mit einem einfachen, am Ventilstößel **12** angreifenden Werkzeug der Ventilkegel **11** gegen die Kraft der Rückstellfeder **8** von seinem Sitz, also der Kegelfläche **16** abgehoben wird, so dass Medium durch den Nebenzweig **4** (Ventilgehäuse **4**) begünstigt durch die in der Innenwand verlaufenden Längsnuten **6,** das geöffnete Rückschlagventil **5,** die Längsrillen **22** am Ventilstö-ßel **12** und den Hohlraum **23** des Gegenstücks **17** dosiert entweichen kann. Umgekehrt wäre auch ein dosierter Druckaufbau im System möglich.

Dieses in die Schnellkupplungseinheit integrierte Rückschlagventil **5** ist einfach und preiswert in der Herstellung, es besteht nur aus wenigen, vergleichsweise einfach geformten Teilen, nämlich dem Ventilgehäuse **4** (Nebenzweig **4**), dem Ventilkörper **10** mit Dichtring **15**, dem Gegenstück **17** und der Rückstellfeder **8**. Alle diese Teile mit Ausnahme der Rückstellfeder **8** können vorteilhaft aus Kunststoff hergestellt werden, was die Herstellung erleichtert und kostensparend macht und Gewicht spart. Seine Betätigung ist einfach, es wird dazu kein Spezialwerkzeug benötigt, die wiederholte Betätigung macht keinerlei Probleme, es ist kein Wegwerfartikel nach einer nur einmaligen Betätigung. Durch die Kegelform des Schließkörpers und dessen Anlagefläche, den verformbaren und einpressbaren Dichtring **15** und die Verschweißung des Ventilgehäuses **4** mit dem Gegenstück **17** an den Stoßflächen wird größtmögliche Dichtigkeit erreicht.

## Patentansprüche

1. Schnellkupplungseinheit für fließ- oder strömungsfähige Medien führende Leitungen mit integriertem Rückschlagventil **(5)** zur Steuerung des Mediendrucks oder zur Entlüftung in den das Medium führenden Leitungen, wobei das Rückschlagventil **(5)** in einem von der Hauptleitung der Schnellkupplungseinheit **(1)** abgehenden, nach außen offenen Nebenzweig angeordnet ist und sein Ventilkörper **(10)** aus seiner den Durchtritt für das Medium sperrenden Stellung über einen von außen zugänglichen Ventilstößel **(12)** gegen eine Rückstellkraft in seine den Durchtritt für das Medium freigebenden Stellung bringbar ist, wobei der Nebenzweig zugleich das Ventilgehäuse **(4)** des Rückschlagventils **(5)** ist, **dadurch gekennzeichnet, dass** der in dem Ventilgehäuse **(4)** axial bewegbare Ventilkörper **(10)** einstückig ausgebildet ist und einen Ventilkegel **(11)** aufweist, dessen Ventilsitz als korrespondierende Kegelfläche **(16)** an einem in das offene Ende des Ventilgehäuses **(4)** gegen dessen Innenwand abdichtend eingeschobenen, hohlen Gegenstücks **(17)** ausgebildet ist, und dass der Ventilkegel **(11)** in seinem Umfang eine Ringnut **(14)** zur Aufnahme eines Dichtrings **(15)** aufweist.

2. Schnellkupplungseinheit nach Anspruch 1, **dadurch gekennzeichnet, dass** der Ventilkegel **(11)** an seinem schmalen, nach außen gerichteten Ende übergeht in den Ventilstößel **(12)**, der in den Hohlraum **(23)** eines nach außen offenen, becherförmigen Abschnitts **(24)** des Gegenstücks **(17)** ragt.

3. Schnellkupplungseinheit nach Anspruch 2, **dadurch gekennzeichnet, dass** der Ventilstößel **(12)** zylindrisch geformt ist und an der innenfläche **(21)** eines hohlzylindrischen Abschnitts des Gegenstücks **(17)** zwischen dessen Kegelfläche **(16)** und dessen becherförmigem Abschnitt **(24)** geführt ist und dass der Ventilstößel **(12)** in seiner Umfangsfläche mit Längsrillen **(22)** versehen ist.

4. Schellkupplungseinheit nach Anspruch 1, **dadurch gekennzeichnet, dass** am breiten, nach innen gerichteten Ende des Ventilkegels **(11)** ein zylindrischer Fortsatz **(13)** angeformt ist, der der Führung und Zentrierung einer Rückstellfeder **(8)** dient und durch den am Ventilkegel **(11)** eine Stufe **(9)** gebildet ist und dass sich die Rückstellfeder **(8)** mit ihrem einen Ende auf dieser Stufe **(9)** und mit ihrem anderen Ende auf einer von der Wand des Ventilgehäuses **(4)** nach innen ragenden Ringfläche **(7)** abstützt.

5. Schnellkupplungseinheit nach Anspruch 1, **dadurch gekennzeichnet, dass** die Innenwand des Ventilgehäuses **(4)** mit Längsnuten **(6)** versehen ist.

6. Schellkupplungseinheit nach Anspruch 1, **dadurch gekennzeichnet, dass** das Ventilgehäuse **(4)** und das Gegenstück **(17)** an ihren Stoßstellen miteinander verschweißt bzw. verschmolzen sind.

7. Schellkupplungseinheit nach Anspruch 1, **dadurch gekennzeichnet, dass** das Ventilgehäuse **(4),** das Gegenstück **(17)** und der Ventilkörper **(10)** aus Kunststoff gespritzt oder gegossen sind.

## Claims

1. Fast coupling unit for lines conducting free-flowing media with integrated check valve **(5)** for controlling the pressure of the media or venting the lines conducting the medium, whereby the check valve **(5)** is arranged in a side branch that comes off from the main line of the fast coupling unit **(1)** and is open on the outside, and its valve body **(10)** is able to be moved against a restoring force from its position blocking the passage of the medium by an externally accessible valve lifter **(12)** into its position allowing the passage of the medium, whereby the side branch is at the same time the valve housing **(4)** of the check valve **(5), characterised in that** the axially movable valve body **(10)** in the valve housing **(4)** is formed as one piece and has a valve cone **(11),** the valve seat of which is formed as a corresponding tapered surface **(16)** on a hollow counterpart **(17)** inserted in the open end of the valve housing **(4)** against its interior wall to form a seal, and that the valve cone **(11)** has a radial groove **(14)** in its circumference for accepting a sealing ring **(15).**

2. Fast coupling unit according to Claim 1, **characterised in that** the valve cone **(11)** at its narrow outward pointing end merges into the valve lifter **(12),** which projects into the cavity **(23)** of a cup-shaped section **(24)** of the counterpart **(17)** that is open on the outside.

3. Fast coupling unit according to Claim 2, **characterised in that** the valve lifter **(12)** is formed cylindrically and is guided on the interior surface **(21)** of a hollow cylindrical section of the counterpart **(17)** between its tapered surface **(16)** and its cup-shaped section **(24),** and that the valve lifter **(12)** is provided with longitudinal channels **(22)** on its peripheral surface.

4. Fast coupling unit according to Claim 1, **characterised in that** at the wide, inward pointing end of the valve cone **(11)** a cylindrical appendix **(13)** is formed, which serves for guiding and centring a restoring spring **(8)** and by means of which a step **(9)** is formed on the valve cone **(11),** and that the restoring spring **(8)** is supported with its one end on this step **(9)** and with its other end on an inwardly protruding annular surface **(7)** of the wall of the valve housing **(4).**

5. Fast coupling unit according to Claim 1, **characterised in that** the interior wall of the valve housing **(4)** has longitudinal grooves **(6).**

6. Fast coupling unit according to Claim 1, **characterised in that** the valve housing **(4)** and the counterpart **(17)** are welded or fused to one another at their joints.

7. Fast coupling unit according to Claim 1, **characterised in that** the valve housing **(4),** the counterpart **(17)** and the valve body **(10)** are injection-moulded or cast in plastic.

## Revendications

1. Ensemble de raccord rapide destiné à des conduites véhiculant des fluides capables de s'écouler ou de couler, à valve de retenue (5) incorporée, pour réguler la pression du fluide ou purger les conduites véhiculant le fluide, la valve de retenue (5) étant en l'occurrence disposée dans une branche auxiliaire ouverte sur l'extérieur, piquée sur la conduite principale du raccord rapide (1) et son élément formant corps (10) pouvant être amené, à partir de sa position dans laquelle il s'oppose au passage du fluide, par l'intermédiaire d'une tige-poussoir (12) accessible depuis l'extérieur, en contrant pour ce faire une force de rappel, dans sa position dans laquelle il laisse passer le fluide, la branche auxiliaire (4) constituant en l'occurrence dans le même temps le logement (4) de la valve de retenue (5), **caractérisé en ce que** le corps (10) de la valve, pouvant être déplacé dans le sens axial, a une configuration monobloc et comporte un cône (11) dont le siège est défini, sous la forme d'une surface conique conjuguée (16), dans un élément antagoniste creux (17) emmanché dans l'extrémité ouverte de la branche auxiliaire ou du logement de la valve (4) de manière étanche vis à vis de la paroi intérieure de ce dernier et **en ce que** le cône de la valve (11) comporte au niveau de sa périphérie une gorge circulaire (14) dans laquelle une bague d'étanchéité (15) est destinée à être montée.

2. Ensemble de raccord rapide selon la revendication 1, **caractérisé en ce que** le cône (11) de la valve se poursuit, au niveau de son extrémité de plus petit diamètre orientée vers l'extérieur, par une tige-poussoir de valve (12) qui fait saillie dans la cavité (23) d'une portion en forme de godet (24) ouverte vers l'extérieur de l'élément antagoniste (17).

3. Ensemble de raccord rapide selon la revendication 2, **caractérisé en ce que** la tige-poussoir de valve (12) a une configuration cylindrique et coulisse le long de la surface intérieure (21) d'une portion cylindrique creuse de l'élément antagoniste (17), entre sa surface conique (16) et sa portion en forme de godet (24), et **en ce que** la tige-poussoir de valve (12) est munie sur sa périphérie de rainures longitudinales (22).

4. Ensemble de raccord rapide selon la revendication 1, **caractérisé en ce qu'**au niveau de l'extrémité de plus grand diamètre, orientée vers l'intérieur, du cône (11) de la valve, un prolongement cylindrique (13) est réalisé solidaire par moulage, prolongement qui sert à guider et à centrer un ressort de rappel (8) et qui est défini par un gradin (9) réalisé sur le cône (11) de la valve et **en ce qu'**une extrémité du ressort de rappel (8) prend appui sur ce gradin (9) tandis que son autre extrémité prend appui sur une surface annulaire (7) faisant saillie vers l'intérieur depuis la paroi de la branche auxiliaire qui correspond aussi au logement (4) de la valve.

5. Ensemble de raccord rapide selon la revendication 1, **caractérisé en ce que** la paroi intérieure du logement (4) de la valve est munie de rainures longitudinales (6).

6. Ensemble de raccord rapide selon la revendication 1, **caractérisé en ce que** le logement (4) de la valve et l'élément antagoniste (17) sont, au niveau de leur interface d'assemblage, rendus solidaire l'un de l'autre par soudage ou par fusion.

7. Ensemble de raccord rapide selon la revendication 1, **caractérisé en ce que** le logement (4) de la valve, l'élément antagoniste (17) et le corps (10) de la valve sont réalisés en matière plastique par moulage classique ou par moulage par injection.
